# EUROPÄISCHE PATENTANMELDUNG

(11) **EP 3 608 609 A1**
(43) Veröffentlichungstag der Anmeldung: **12.02.2020**
(21) Anmeldenummer: 18188276.2
(22) Anmeldetag: 09.08.2018
(51) Int. Cl.: F25D 3/08, B65D 81/38

(54) **AUFNAHMEHÜLLE UND MEHRKAMMER-ISOLIERTASCHE ENTHALTEND DIE AUFNAHMEHÜLLE**

(71) Anmelder: Papier-Mettler KG, 54497 Morbach (DE)
(72) Erfinder: Pauly, Björn Michael, 54470 Burgen (DE); Eberhard, Patrick, 54497 Morbach-Hundheim (DE)
(74) Vertreter: Metten, Karl-Heinz

(57) **Zusammenfassung**

Die Erfindung betrifft Aufnahmehülle (1) für eine thermische Isoliereinlage (2) wobei ein erster Aufnahmeraum (8) für Konsumartikel zwischen einer Vorderinnenwandung (13) und einer Rückinnenwandung (12) ausgebildet ist und durch diese begrenzt ist, wobei ein zweiter Aufnahmeraum (9) für die thermische Isoliereinlage (2) den ersten Aufnahmeraum (8) in Richtung eines Bodenendes (5) umschließt und in einem ersten Teilbereich (9a) durch Vorderaußenwandung (14) und Vorderinnenwandung (13) begrenzt ist. Die Erfindung betrifft auch eine Mehrkammer-Isoliertasche (3) mit der Aufnahmehülle (1) und eine Verwendung der Aufnahmehülle (1).

## Beschreibung

Die vorliegende Erfindung betrifft eine Aufnahmehülle für eine thermische Isoliereinlage, eine Mehrkammer-Isoliertasche mit der Aufnahmehülle und eine Verwendung derselben beim Transport von Transportgütern, insbesondere Lebensmitteln.

Lebensmittel werden gerne über den Online-Versandhandel bestellt. Ein Problem dabei ist es, die Lebensmittel wohlbehalten zum Endverbraucher zu transportieren. Der Vertreiber der Lebensmittel hat regelmäßig keinerlei Kontrolle darüber, unter welchen Bedingungen diese transportiert werden, insbesondere was das Wetter betrifft und Stöße während des Transports. Es kann beispielsweise an sehr heißen Tagen vorkommen, dass eine beträchtliche Wärmemenge auf eine Versandtasche einwirkt, während darin enthaltene Lebensmittel kühl gehalten werden müssen.

Kühltaschen sind aus dem Stand der Technik hinreichend bekannt. Auch Transportboxen aus Styropor, die mit Trockeneins gefüllt sind, können einen sicheren Transport bei geeigneter Temperatur gewährleisten.

Die EP 0 037 545 A2 offenbart beispielsweise einen tragbaren Isolierbehälter, insbesondere eine Kühltasche oder Kühlbox, wobei ein isoliertes Fenster die Bildung einer Kältebrücke durch die Wand des Isolierbehälters hindurch verhindert.

Die DE 20 2010 009 592 U1 offenbart eine transportable Kühltasche mit aktiver Kühlung und einem verschließbaren thermisch isolierten Behältnis zur Aufnahme von Gegenständen.

Gleichwohl sind die bisherigen Lösungen nicht zufriedenstellend. Geeignete Transportbehälter, welche insbesondere auch Hitze abschirmen, sind immer noch sperrig und teuer in der Fertigung. Auch was eine Wiederverwertung betrifft, ergeben sich beträchtliche Nachteile. Somit sollte nicht nur ein Schutz vor Stößen und einem Temperaturausgleich erfolgen, sondern es gibt zahlreiche weitere Aspekte die verbesserungswürdig sind.

Die Aufgabe der vorliegenden Erfindung war es daher, die Nachteile des Stands der Technik zu überwinden und einen Aufnahmehülle bereitzustellen, die in Verbindung mit einer thermischen Isoliereinlage kostengünstig in der Herstellung ist und zudem die enthaltenen Transportgüter, insbesondere Lebensmittel, vor Temperaturschwankungen oder Hitze oder Kälte schützen kann. Auch ist es eine weitere Aufgabe, eine Mehrkammer-Isoliertasche mit der Aufnahmehülle bereitzustellen. Ferner betrifft die Erfindung die Verwendung der Aufnahmehülle und Mehrkammer-Isoliertasche für den Transport von Lebensmitteln.

Die Aufgabe wird gelöst durch eine Aufnahmehülle für eine, insbesondere entfernbare und/oder austauschbare, thermische Isoliereinlage mit einem Eingriffsöffnungsende und einem Bodenende sowie einem ersten und zweiten Aufnahmehüllenrand, wobei besagte Aufnahmehüllenränder sich zwischen Eingriffsöffnungsende und Bodenende erstrecken, umfassend eine Rückaußenwandung, eine Rückinnenwandung, eine Vorderaußenwandung und eine Vorderinnenwandung, wobei ein erster Aufnahmeraum für Konsumartikel zwischen Vorderinnenwandung und die Rückinnenwandung ausgebildet ist und durch diese begrenzt ist, wobei der erste Aufnahmeraum am Eingriffsöffnungsende eine Eingriffsöffnung aufweist, wobei ein zweiter Aufnahmeraum für die thermische Isoliereinlage, d.h. geeignet zur Aufnahme einer thermischen Isoliereinlage, den ersten Aufnahmeraum in Richtung des Bodenendes, insbesondere am Bodenende, umschließt und in einem ersten Teilbereich durch Vorderaußenwandung und Vorderinnenwandung begrenzt ist.

Es hat sich gezeigt, dass die vorstehend beschriebene Aufnahmehülle geeignet ist, eine thermische Isoliereinlage aufzunehmen. Die Aufnahmehülle bietet dabei einen zweiten Aufnahmeraum, in welchen die Isoliereinlage eingebracht werden kann. Die Isoliereinlage wird also nicht in demselben Aufnahmeraum untergebracht, in dem sich auch das Transportgut befindet. Dies hat den Vorteil, dass das Transportgut mit der Isoliereinlage nicht in Kontakt kommt, insbesondere nicht durch diese beeinträchtigt oder beschädigt wird. Bei Polstern können sich Fasern lösen und bei kühlenden Elementen können diese gegebenenfalls Feuchtigkeit verlieren. Mindestens ebenso wichtig ist jedoch, dass die Isoliereinlage durch die Anordnung des zweiten Aufnahmeraums optimal positioniert werden kann. Wenn die Isoliereinlage zusammen mit dem Transportgut im ersten Aufnahmeraum wäre, kann überhaupt nicht oder schlechter sichergestellt werden, in welchen Raumrichtungen eine hinreichende thermische Isolation erfolgt.

Für die besagte thermische Isoliereinlage kommt grundsätzlich jegliche Einlage für den zweiten Aufnahmeraum in Betracht, welche geeignet ist, ein Transportgut vor äußeren Temperaturen zu schützen. Vorzugsweise handelt es sich in einer Ausgestaltung um eine Einlage in Form eines Polsters, insbesondere in Form einer flexiblen Polstermatte. Das Polster kühlt zwar meist nicht aktiv, verhindert bzw. verzögert aber einen Temperaturausgleich zwischen der Umgebung und dem ersten Aufnahmeraum aufgrund von wärmedämmenden Eigenschaften. Das Prinzip ist von einer Bettdecke her bekannt. Auch kann eine Einlage in Form einer flexiblen Matte mit Taschen für die Aufnahme eines Kühlmittels zwecks aktiver Kühlung des Transportguts vorgesehen sein. Beispielsweise kann es sich um eine kühlende Einlage umfassend Eis oder Kühlgel handeln. Grundsätzlich sind auch wärmende Einlagen denkbar. In jedem Fall verhindert oder verzögert die thermische Isoliereinlage eine Angleichung der Temperatur des Transportguts an die Temperatur außerhalb einer Aufnahmehülle mit der Isoliereinlage. In einer weiteren Ausgestaltung umfasst die thermische Isoliereinlage Maisflocken oder besteht aus diesen. Auch Isoliereinlagen umfassend oder bestehend aus Polystyrol, insbesondere Polystyrol-Stückchen, sind denkbar.

Der erste und/oder zweite Aufnahmeraum kann vorzugsweise expandiert oder komprimiert vorliegen. Es versteht sich, dass bei einer herkömmlichen Tüte, welche flach zusammengefaltet ist, der Aufnahmeraum nicht verschwindet, sondern nur komprimiert wird. Wie bei besagter herkömmlichen Tüte kann auch vorliegend das Volumen des ersten oder zweiten Aufnahmeraums im zusammengefalteten Zustand sehr gering sein und vergrößert sich je nach Bedarf durch Expansion, wenn ein Konsumartikel in den ersten Aufnahmeraum oder eine thermische Isoliereinlage in den zweiten Aufnahmeraum eingefüllt wird. In diese Sinne können auch beim ersten und zweiten Aufnahmeraum im Sinne der vorliegenden Erfindung, die Wandungen, welche den jeweiligen Aufnahmeraum ausbilden, unmittelbar unverbunden aneinander liegen, beispielsweise wenn erfindungsgemäße Aufnahmehüllen ohne Inhalt gestapelt werden. Ein Aufnahmeraum im Sinne der vorliegenden Erfindung setzt jedoch voraus, dass die bestimmungsgemäßen Gegenstände (Lebensmittel bzw. thermische Isolierung) grundsätzlich eingefüllt werden können. Selbiges gilt im Übrigen ggf. auch für den dritten Aufnahmeraum sofern ein solcher implementiert ist. Der erste, zweite und dritte Aufnahmeraum kann auch als erste, zweite und dritte Aufnahmekammer bezeichnet werden.

Vorzugsweise ist das Eingriffsöffnungsende gegenüberliegend vom Bodenende angeordnet. Auch ist es bevorzugt, wenn Eingriffsöffnungsende, Bodenende, erster Aufnahmehüllenrand und zweiter Aufnahmehüllenrand eine rechteckige Grundform beschreiben.

In einer zweckmäßigen Ausgestaltung ist es vorgesehen, dass die Aufnahmehülle zwischen der Rückaußenwandung und der Rückinnenwandung eine Zwischenwandung umfasst, insbesondere zwischen der Vorderaußenwandung und der Vorderinnenwandung keine solche Zwischenwandung vorgesehen ist. Die Zwischenwand kann einen zusätzlichen Schutz bieten. Vorzugsweise ist es jedoch dabei ferner vorgesehen, dass ein dritter Aufnahmeraum, insbesondere mit einer Zwischenraumöffnung, durch besagte Zwischenwandung und Rückaußenwandung begrenzt ist, insbesondere wobei die Zwischenwandung und Rückaußenwandung in Richtung des Bodenendes, insbesondere am Bodenende, und/oder am ersten und zweiten Aufnahmehüllenrand miteinander verschweißt und/oder verklebt sind. Der dritte Aufnahmeraum kann grundsätzlich für Konsumgüter verwendet werden, bei welchen eine Isolierung nicht notwendig ist. Vorzugsweise handelt es sich aber um einen dritten Aufnahmeraum mit einer transparenten Wandung oder einem transparenten Fenster, in welchen Dokumente untergebracht werden können, so dass beispielsweise eine Rechnung oder eine Zustelladresse unmittelbar sichtbar in dem dritten Aufnahmeraum angeordnet werden kann. Insbesondere bevorzugt ist die Zwischenwandung einstückig mit der Rückinnenwandung verbunden.

In einer geeigneten Ausgestaltung kann es vorgesehen sein, dass der zweite Aufnahmeraum für eine thermische Isoliereinlage in einem zweiten Teilbereich durch die Rückinnenwandung und die Zwischenwandung oder die Rückaußenwandung begrenzt ist, insbesondere bevorzugt die Rückaußenwandung. Dies hat den Vorteil, dass eine verbesserte thermische Isolierung auch in Richtung der Rückaußenwandung ermöglicht wird. Der erste und zweite Teilbereich sind vorzugsweise auf gegenüberliegenden Seiten des ersten Aufnahmeraums angeordnet.

Auch ist es in einer zweckmäßigen Ausgestaltung vorgesehen, dass der zweite Aufnahmeraum am Bodenende eine Einlageöffnung aufweist, insbesondere über welche eine thermische Isoliereinlage in den zweiten Aufnahmeraum eingeführt werden kann. Es hat sich gezeigt, dass es vorteilhaft ist, wenn die Isoliereinlage entfernbar ist, insbesondere rückstandsfrei entfernbar. Dies erleichtert zum einen die Herstellung, da nun problemlos die Isoliereinlage durch die Einlageöffnung eingebracht werden kann, und zum anderen ist es nach dem Gebrauch möglich, eine thermische Isoliereinlage zu entfernen und/oder zu ersetzen. Beispielsweise kann es sein, dass die thermische Isoliereinlage ein Polster ist, während die Aufnahmehülle aus einem Kunststoffmaterial, insbesondere einer Kunststofffolie, gebildet wird. Während das Polstermaterial üblicherweise in den Restmüll entsorgt wird, ist es bei Kunststofffolien vorzuziehen, diese getrennt wiederzuverwerten. Durch die Einlageöffnung wird eine solche Trennung ermöglicht, was die Wiederverwertbarkeit verbessert. Auch gibt es Isoliereinlagen, die regelmäßig ersetzt werden sollten, beispielsweise Isoliereinlagen umfassend Eiswürfel. Nach einem mehr oder weniger langen Zeitraum schmelzen die Eiswürfel und neue Eiswürfel sollten eingebracht werden. Wenn die Eiswürfel nicht zerstörungsfrei entfernbar wären, wäre eine erneute Verwertung der Aufnahmehülle schlichtweg nicht möglich.

Auch ist es bevorzugt, wenn die Eingriffsöffnung einen Eingriffsöffnungsabschnitt aufweist mit dem die Eingriffsöffnung, insbesondere irreversibel, verschlossen werden kann und/oder die Einlageöffnung einen Einlageöffnungsabschnitt aufweist mit dem die Einlageöffnung, insbesondere reversibel, verschlossen werden kann. Irreversibel ist ein verschließen, wenn der Verschluss sich danach nicht mehr zerstörungsfrei öffnen lässt. Die beiden recht einfachen Verschlussmöglichkeiten haben - wenn beide implementiert werden - den Vorteil, dass weder die Konsumgüter aus dem ersten Aufnahmeraum entfallen noch die Isoliereinlage aus dem zweiten Aufnahmeraum. Auch wird eine Verschmutzung unterbunden.

Vorzugsweise ist es ferner vorgesehen, dass der Eingriffsöffnungsabschnitt losgelöst von dem ersten und zweiten Aufnahmehüllenrand ist und insbesondere einen Klebestreifen umfasst. Alternativ oder zusätzlich kann es vorgesehen sein, dass der Einlageöffnungsabschnitt mit dem ersten und zweiten Aufnahmehüllenrand verbunden, insbesondere verschweißt, ist. Mithin sind die besagten Öffnungsabschnitte in einer geeigneten Ausführungsform unterschiedlich ausgestaltet. Insbesondere für Polster hat es sich als einfacher und besser erwiesen, wenn der Einlageöffnungsabschnitt mit dem ersten und zweiten Aufnahmehüllenrand verschweißt ist. Es wird auf diese Weise ein einfacher Verschluss sichergestellt. Bei Konsumgütern ist ein solcher Verschluss nicht immer optimal, da eine Weitung der Eingriffsöffnung eingeschränkt würde, was die Entnahme von Konsumgütern erschwert. Hier hat sich ein Verschluss - ähnlich wie bei einem Umschlag - als besonders geeignet erweisen.

Vorzugsweise erstrecken sich der Eingriffsöffnungsabschnitt und/oder die Eingriffsöffnung und/oder der Einlageöffnungsabschnitt und/oder die Einlageöffnung zwischen den beiden Aufnahmehüllenrändern, insbesondere vom ersten bis zum zweiten Aufnahmehüllenrand.

Auch kann es vorgesehen sein, dass der Eingriffsöffnungsabschnitt und/oder Einlageöffnungsabschnitt einstückig mit der Rückaußenwandung verbunden ist, insbesondere der Eingriffsöffnungsabschnitt und der Einlageöffnungsabschnitt. Diese bedeutet, dass diese aus einer Materiallage, insbesondere Folienlage, gefertigt sind und ein Verschweißen nicht erforderlich ist. Hierdurch wird eine besonders kostengünstige Herstellung ermöglicht und zudem ist der Verschluss ganz besonders sicher. Da die Rückaußenwandung einstückig verbunden ist, ist der Materialzusammenhalt besonders gut und es wird verhindert das entlang einer Schweißnaht einer der Öffnungsabschnitt versehentlich auf- oder abgetrennt wird und eine Öffnung ungewollt freigibt.

In einer bevorzugten Ausgestaltung ist es vorgesehen, dass die Aufnahmehülle eine einstückige erste Folie und/oder Papierlage und einstückige zweite Folie und/oder Papierlage umfasst, wobei die einstückige erste und zweite Folie und/oder Papierlage miteinander verbunden sind, wobei die einstückige erste Folie und/oder Papierlage die Rückaußenwandung und vorzugsweise den Eingriffsöffnungsabschnitt und/oder Einlageöffnungsabschnitt umfasst und die einstückige zweite Folie und/oder Papierlage die Rückinnenwandung, die Vorderinnenwandung und die Vorderaußenwandung und vorzugsweise die Zwischenwandung umfasst. In einer Variante der genannten bevorzugten Ausgestaltung ist es vorgesehen, dass die Aufnahmehülle die einstückige erste Folie und die einstückige zweite Folie umfasst, wobei die erste und zweite Folie miteinander verschweißt sind, wobei die einstückige erste Folie die Rückaußenwandung und vorzugsweise den Eingriffsöffnungsabschnitt und Einlageöffnungsabschnitt umfasst und die einstückige zweite Folie die Rückinnenwandung, die Vorderinnenwandung und die Vorderaußenwandung und vorzugsweise die Zwischenwandung umfasst. In einer alternativen weiteren Variante der genannten bevorzugten Ausführungsform ist es vorgesehen, dass die Aufnahmehülle die einstückige erste Papierlage und die ein stückige zweite Papierlage umfasst, wobei die erste und zweite Papierlage miteinander verklebt sind, wobei die einstückige erste Papierlage die Rückaußenwandung und vorzugsweise den Eingriffsöffnungsabschnitt und/oder Einlageöffnungsabschnitt umfasst und die einstückige zweite Papierlage die Rückinnenwandung, die Vorderinnenwandung und die Vorderaußenwandung und vorzugsweise die Zwischenwandung umfasst. Auch kann es vorgesehen sein, das die Aufnahmehülle abgesehen von Klebstreifen oder sonstigen Klebemitteln nur aus zwei Teilen, d.h. der ersten und zweiten Folie und/oder Papierlage gebildet wird. Es hat sich überraschenderweise gezeigt, dass mit sehr wenig Folien und/oder Papierlagen komplexe Aufnahmehüllen erzeugt werden können, die in besonderem Maße geeignet sind, verschieden Aufnahmeräume für thermische Isoliereinlagen, Konsumgüter und ggf. Dokumente auszubilden. Dies senkt die Herstellungskosten ganz erheblich, was insbesondere bei hohen Produktionsstückzahlen von großer Bedeutung ist.

In einer Ausführungsform weist die Eingriffsöffnung einen ersten Öffnungsrand und einen zweiten Öffnungsrand auf, wobei die Zwischenwandung sowie die Rückinnenwandung am ersten Öffnungsrand einstückig verbunden sind und/oder die Vorderinnenwandung sowie die Vorderaußenwandung am zweiten Öffnungsrand einstückig verbunden sind. Hierdurch wird die Eingriffsöffnung besonders stabil, wobei Schweißnähte längs der Öffnung nicht vorgesehen sind. Auch kann die thermische Isoliereinlage bis zum ersten und zweiten Öffnungsrand ausgeführt werden, so dass die thermische Abschirmung auch im Öffnungsbereich besonders gut ist. Ferner kann die thermische Isoliereinlage hierbei auch den ersten und zweiten Öffnungsrand stabilisieren, insbesondere wenn diese ein Polster ist.

Auch kann es vorgesehen sein, dass am ersten und zweiten Aufnahmehüllenrand jeweils zumindest bereichsweise mindestens fünf Wandungen miteinander verschweißt oder verklebt sind, insbesondere die Rückaußenwandung, die Zwischenwandung, die Rückinnenwandung, die Vorderinnenwandung und die Vorderaußenwandung, vorzugsweise in dieser Reihenfolge. Hierdurch werden die Wandungen miteinander verbunden und da die Schweißung oder Klebung zahlreiche Wandungen simultan verbindet, werden der Aufnahmehüllenrand und die Verbindung der Wandungen in besonderem Maße stabilisiert. Auch senkt es die Herstellungskosten erheblich, wenn nur wenige Klebe- oder Schweißnähte erforderlich sind.

Vorzugsweise ist es vorgesehen, dass die Rückaußenwandung, die Rückinnenwandung, die Vorderinnenwandung, die Vorderaußenwandung und insbesondere die Zwischenwandung Papier und/oder Kunstsoff umfassen, insbesondere zu mindestens 90 Gew.-%, insbesondere mindestens 95 Gew.-%, aus Papier und/oder Kunstsoff gebildet sind, insbesondere aus Kunststoff. Bei dem Kunstsoff kann es sich vorzugsweise um Polyethylen oder Polypropylen handeln. Auch ist es in einer Ausgestaltung bevorzugt, wenn die Rückaußenwandung, die Rückinnenwandung, die Vorderinnenwandung, die Vorderaußenwandung und insbesondere die Zwischenwandung transparente Folienwandungen sind.

Die Erfindung betrifft ferner eine Mehrkammer-Isoliertasche umfassend eine Aufnahmehülle, wie diese vorstehend beschrieben wurde, und eine thermische Isoliereinlage, wobei die thermische Isoliereinlage im zweiten Aufnahmeraum vorliegt und den ersten Aufnahmeraum umschließt, insbesondere thermisch isoliert und/oder kühlt oder wärmt.

Eine Mehrkammer-Isoliertasche im Sinne der Erfindung ist eine Tasche, die geeignet ist, ein Transportgut zumindest zeitweise vor den Temperaturen außerhalb der Tasche zu schützen, insbesondere einen Temperaturausgleich zwischen ersten Innenraum und der Umgebung verhindert oder verzögert. Es kann sich beispielsweise um eine Kühltasche handeln. Auch kann es sich um eine gepolsterte Tasche handeln, wobei das Polster eine thermische Isolierung bewirkt. Grundsätzlich kann es sich auch um eine Tasche handeln, welche den Inhalt wärmt. In jedem Fall wird eine Angleichung der Temperatur des Transportguts an die Temperatur außerhalb der Tasche verhindert oder erheblich verzögert. Vorzugsweise wird die eingangs beschriebene thermische Isoliereinlage eingesetzt.

Vorzugsweise ist es vorgesehen, dass die die thermische Isoliereinlage U-förmig und/oder einstückig ausgebildet ist. Die thermische Isoliereinlage hat jedoch auch bei diesen bevorzugten Ausgestaltungen nicht von Anfang an U-förmig ausgestaltet zu sein. Der zweite Aufnahmeraum umfasst vorzugsweise den ersten und zweiten Teilbereich, welche die Isoliereinlage in eine U-Form umformen können. Beispielsweise kann die thermische Isoliereinlage ein einstückiges Polster sein, welches innerhalb des zweiten Aufnahmeraums gebogen wird. Ein U-Form liegt zumindest dann vor, wenn gegenüberliegende zwei Schenkel, insbesondere kontinuierlich und/oder über eine Biegung, miteinander verbunden sind. Kontinuierlich heißt stetig, d.h. ohne Knick wie bei einer Faltung.

In einer Ausgestaltung ist die thermische Isoliereinlage ein, insbesondere einstückiges, Polster, insbesondere Wärmedämmtextilpolster. Hierbei haben sich besonders Vliesstoffe oder Filzstoffe bewährt. In einer Ausgestaltung ist das Polster in einer Ausgestaltung aus genau einer, insbesondere homogenen, Materialzusammensetzung gebildet, beispielsweise ein Vliesstoff oder ein Wirkstoff ohne textile Außenhülle.

In einer weiteren Ausgestaltung umfasst die thermische Isoliereinlage Maisflocken oder besteht aus diesen. Auch Isoliereinlagen umfassend oder bestehend aus Polystyrol, insbesondere Polystyrol-Stückchen, sind denkbar.

Ferner hat es sich als vorteilhaft erwiesen, wenn die thermische Isoliereinlage in der Aufnahmehülle eine mittlere Materialstärke von mindestens 0,25 cm, vorzugsweise mindestens 1,0 cm, im nicht komprimierten Zustand aufweist, d.h. wenn kein zusätzlicher Druck ausgeübt wird (der Luftdruck wird nicht mit berücksichtigt). Auch ist es bevorzugt, wenn die mittlere Materialstärke weniger als 3,0 cm beträgt. Es hat sich gezeigt, dass durch diese vergleichsweise hohen Materialstärken eine besonders sichere Polsterung erzielt werden kann und überraschenderweise trotzdem eine Einbringung in den zweiten Aufnahmeraum möglich ist.

Vorzugsweise ist oder umfasst die thermische Isoliereinlage in einer Ausgestaltung ein Kühlelement, insbesondere aufweisend ein Kühlgel oder Eis. Vorzugsweise hat das Kühlelement eine Temperatur von weniger als 10°C oder ist ausgelegt, um als Kühlelement zur Erzeugung einer Temperatur von weniger als 10°C eingesetzt zu werden. Beutel mit Kühlgel können beispielsweise in Form einer Matte angeordnet und als thermische Isoliereinlage in den zweiten Aufnahmeraum eingebracht werden.

Die Erfindung betrifft ferner die Verwendung der vorstehend beschriebenen Aufnahmehülle mit einer thermische Isoliereinlage oder der vorstehend beschriebenen Mehrkammer-Isoliertasche für Lebensmittel, insbesondere für den Online-Versand von Lebensmitteln. Insbesondere betroffen ist besagte Verwendung für die thermische Isolierung oder Kühlung von Lebensmitteln.

Mit der vorliegenden Erfindung ist es gelungen, eine überraschend einfach herstellbare Mehrkammer-Isoliertasche zu entwickeln. Hierbei kann die Aufnahmehülle der Mehrkammer-Isoliertasche gesondert gefertigt werden und vorzugsweise ist auch eine Separierung der thermischen Isoliereinlage von der Aufnahmehülle möglich. Im Ergebnis werden die Herstellungskosten deutlich gesenkt und die Wiederverwertbarkeit verbessert. Auch wird ein besonders sicherer Transport mit zugleich sehr guter thermischer Isolierung des Transportguts ermöglicht. Als vorteilhaft wird auch angesehen, dass die thermischen Isoliereinlage bei der gattungsgemäßen Verwendung der Mehrkammer-Isoliertasche während des Transports wieder mit dem Transportgut noch mit der Umgebung in Kontakt kommt. Dies hat zur Folge, dass die thermische Isoliereinlage ggf. mehrmals verwendet werden kann.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: einen schematischen Querschnitt durch eine erste Ausführungsform der Mehrkammer-Isoliertasche;
- Figur 2: eine schematische Obenaufansicht der ersten Ausführungsform der Mehrkammer-Isoliertasche;
- Figur 3: eine perspektivische Ansicht aus Richtung der Eingriffsöffnung auf die erste Ausführungsform der Mehrkammer-Isoliertasche;
- Figur 4: eine schematische Obenaufansicht einer thermische Isoliereinlage; und
- Figur 5: einen schematischen Querschnitt durch eine zweite Ausführungsform der Mehrkammer-Isoliertasche.

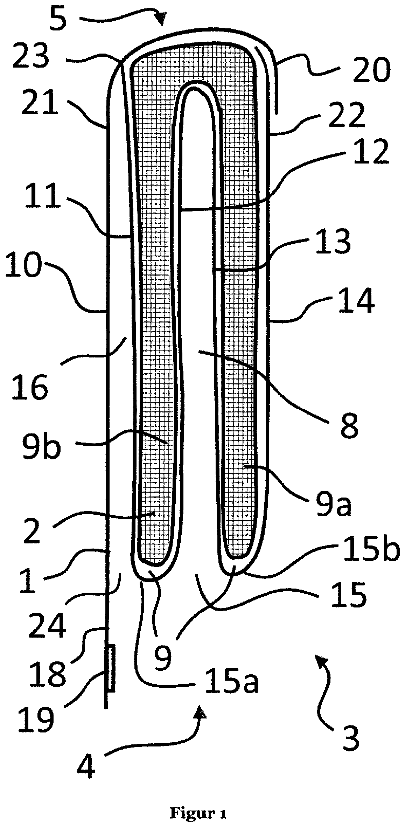

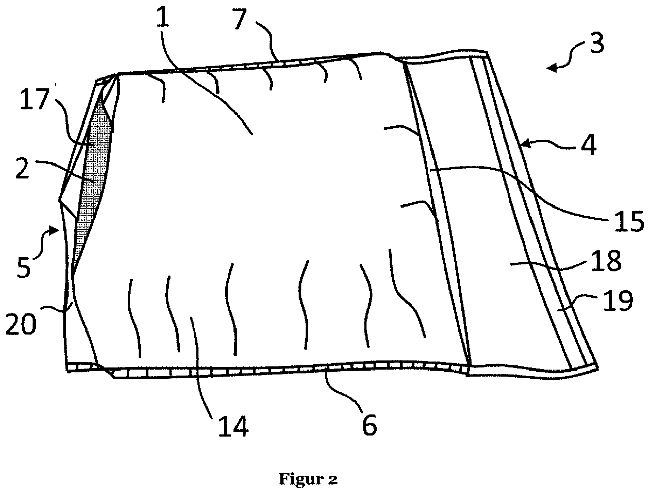

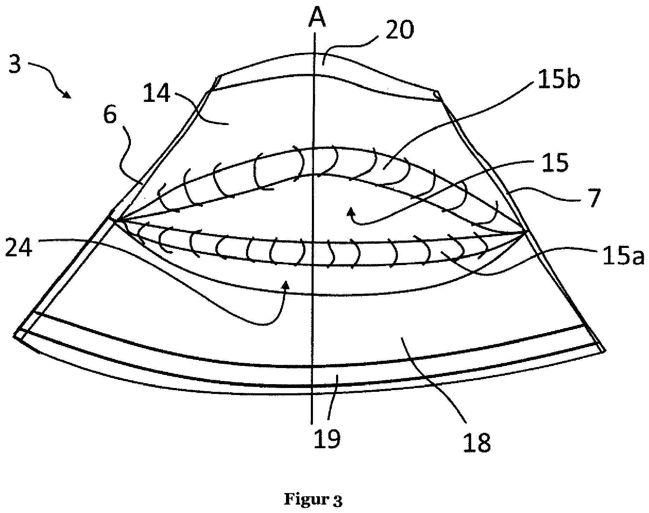

Figur 1 zeigt einen schematischen Querschnitt durch eine erste Ausführungsform der Mehrkammer-Isoliertasche 3 und zwar entlang der Achse A in Figur 3. Zu sehen ist die Aufnahmehülle 1 für eine thermische Isoliereinlage 2 mit einem Eingriffsöffnungsende 4 und einem Bodenende 5 sowie einem ersten und zweiten Aufnahmehüllenrand (hier nicht zu sehen, vgl. Figuren 2 und 3), wobei besagte Aufnahmehüllenränder sich zwischen Eingriffsöffnungsende 4 und Bodenende 5 erstrecken, umfassend eine Rückaußenwandung 10, eine Rückinnenwandung 12, eine Vorderaußenwandung 14 und eine Vorderinnenwandung 13, wobei ein erster Aufnahmeraum 8 für Konsumartikel zwischen Vorderinnenwandung 13 und die Rückinnenwandung 12 ausgebildet ist und durch diese begrenzt ist, wobei der erste Aufnahmeraum 8 am Eingriffsöffnungsende 4 eine Eingriffsöffnung 15 aufweist, wobei ein U-förmiger zweiter Aufnahmeraum 9 für die thermische Isoliereinlage 2 den ersten Aufnahmeraum 8 in Richtung des Bodenendes 5 umschließt und in einem ersten Teilbereich 9a durch Vorderaußenwandung 14 und Vorderinnenwandung 13 begrenzt ist. Ein dritter Aufnahmeraum 16 mit einer Zwischenraumöffnung 24 ist durch eine Zwischenwandung 11 und die Rückaußenwandung 10 begrenzt, insbesondere wobei die Zwischenwandung 11 und Rückaußenwandung 10 in Richtung des Bodenendes 5 miteinander verschweißt und/oder verklebt sind. Der zweite Aufnahmeraum 9 für eine thermische Isoliereinlage 2 ist in einem zweiten Teilbereich 9b durch die Rückinnenwandung 12 und die Zwischenwandung 11 begrenzt ist. Die Eingriffsöffnung 15 weist einen ersten Öffnungsrand 15a und einen zweiten Öffnungsrand 15b auf, wobei die Zwischenwandung 11 sowie die Rückinnenwandung 12 am ersten Öffnungsrand 15a einstückig verbunden sind und die Vorderinnenwandung 13 sowie die Vorderaußenwandung 14 am zweiten Öffnungsrand 15b einstückig verbunden sind. Die Eingriffsöffnung 15 hat ferner einen Eingriffsöffnungsabschnitt 18 mit dem die Eingriffsöffnung 15 verschlossen werden kann und umfasst einen Klebestreifen 19. Es ist ferner vorgesehen, dass die Einlageöffnung 17 einen Einlageöffnungsabschnitt 20 aufweist, mit dem die Einlageöffnung 17 verschlossen werden kann. Die die Aufnahmehülle umfasst eine einstückige erste Folie 21 und einstückige zweite Folie 22, wobei die erste und zweite Folie 21, 22 miteinander an einer Schweißnaht 23 verbunden sind, wobei die einstückige erste Folie 21 die Rückaußenwandung 10 und den Eingriffsöffnungsabschnitt 18 und den Einlageöffnungsabschnitt 20 umfasst und die einstückige zweite Folie 22 die Zwischenwandung 11, die Rückinnenwandung 12, die Vorderinnenwandung 13 und die Vorderaußenwandung 12 umfasst.

Figur 2 zeigt schematische Obenaufansicht der ersten Ausführungsform der Mehrkammer-Isoliertasche 3. Die Aufnahmehülle 1 für die thermische Isoliereinlage 2 mit einem Eingriffsöffnungsende 4 und einem Bodenende 5 weist einen ersten Aufnahmehüllenrand 6 und einen zweiten Aufnahmehüllenrand 7 auf. Die Vorderaußenwandung 14 ist beidseitig durch den ersten und zweiten Aufnahmehüllenrand 6, 7 mit den weiteren Wänden (nicht gezeigt, vgl. Figur 1) verbunden. Die thermische Isoliereinlage 2 ist durch die Einlageöffnung 17 sichtbar, wobei der Einlageöffnungsabschnitt 20 aufgezogen wurde, um dies zu gewährleisten. Üblicherweise verschließt der Einlageöffnungsabschnitt 20 die Einlageöffnung 17, so dass die thermische Isoliereinlage 2 nicht sichtbar ist. Gegenüberliegend befindet sich die Eingriffsöffnung 15, wobei der Eingriffsöffnungsabschnitt 18 noch nicht über den Klebestreifen 19 mit der Vorderaußenwandung 14, um besagte Eingriffsöffnung 15 zu verschließen, Der Umschlag ist also quasi offen.

Figur 3 zeigt eine perspektivische Ansicht aus Richtung der Eingriffsöffnung 15 auf die erste Ausführungsform der Mehrkammer-Isoliertasche 3. Die Achse A zeigt an, an welcher Stelle der Querschnitt der Figur 1 erfolgt ist. Die Eingriffsöffnung 15 ist durch den ersten Öffnungsrand 15a und einen zweiten Öffnungsrand 15b begrenzt. Zwischen dem ersten Öffnungsrand 15a und dem Eingriffsöffnungsabschnitt 18 mit dem Klebestreifen 19 befindet sich die Zwischenraumöffnung 24. Die Vorderaußenwandung 14 ist beidseitig durch den ersten und zweiten Aufnahmehüllenrand 6, 7 mit den weiteren Wänden verbunden. Gegenüberliegend von der Eingriffsöffnung 15 wird die Einlageöffnung durch den Einlageöffnungsabschnitt 20 verschlossen und verdeckt.

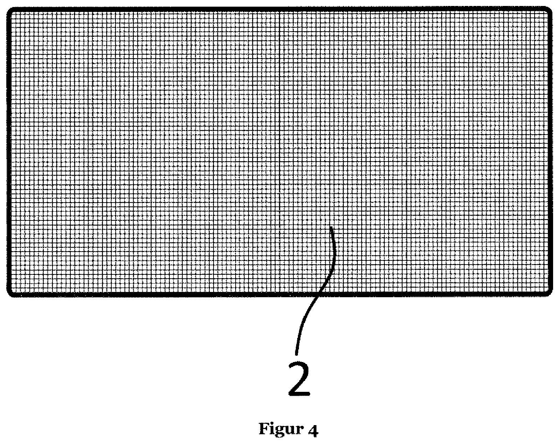

Figur 4 zeigt eine schematische Obenaufansicht einer thermische Isoliereinlage 2. Es handelt sich um ein einfaches Polster in form einer rechteckigen Polstermatte. Dies wird in eine U-Form gebogen, wenn sie in der zweiten Aufnahmeraum vorliegt.

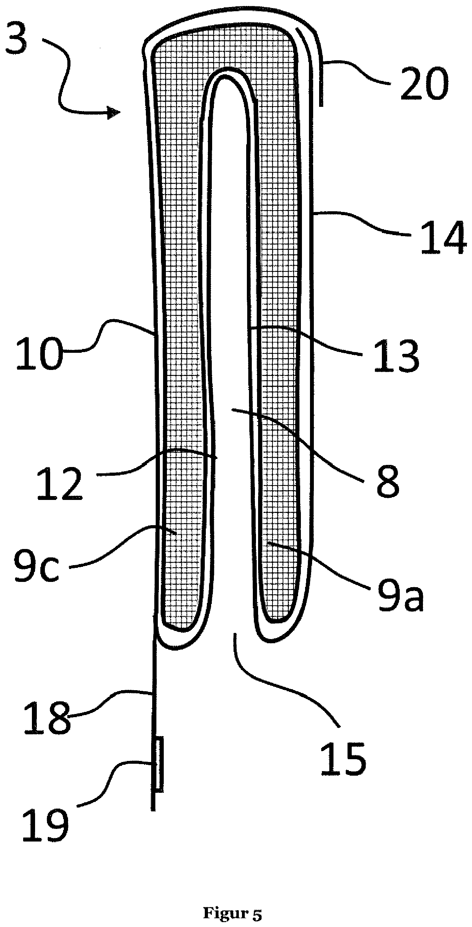

Figur 5 zeigt einen schematischen Querschnitt durch eine zweite Ausführungsform der Mehrkammer-Isoliertasche 3. Grundsätzlich sind die Merkmale analog zur Figur 1 bezeichnet. Die Figur 5 unterscheidet sich dadurch von der Figur 1, dass ein Zwischenwandung und ein dritter Aufnahmeraum nicht vorgesehen sind. Der zweite Aufnahmeraum für eine thermische Isoliereinlage ist dementsprechend in einem zweiten Teilbereich 9c durch die Rückinnenwandung 12 und die Rückaußenwandung 10 begrenzt.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Aufnahmehülle (1) für eine, insbesondere entfernbare, thermische Isoliereinlage (2) mit einem Eingriffsöffnungsende (4) und einem Bodenende (5) sowie einem ersten und zweiten Aufnahmehüllenrand (6,7), wobei besagte Aufnahmehüllenränder sich zwischen Eingriffsöffnungsende (4) und Bodenende (5) erstrecken,
umfassend eine Rückaußenwandung (10), eine Rückinnenwandung (12), eine Vorderaußenwandung (14) und eine Vorderinnenwandung (13),
wobei ein erster Aufnahmeraum (8) für Konsumartikel zwischen Vorderinnenwandung (13) und die Rückinnenwandung (12) ausgebildet ist und durch diese begrenzt ist, wobei der erste Aufnahmeraum (8) am Eingriffsöffnungsende (4) eine Eingriffsöffnung (15) aufweist,
wobei ein zweiter Aufnahmeraum (9) für eine thermische Isoliereinlage (2) den ersten Aufnahmeraum (8) in Richtung des Bodenendes (5) umschließt und in einem ersten Teilbereich (9a) durch Vorderaußenwandung (14) und Vorderinnenwandung (13) begrenzt ist.

2. Aufnahmehülle nach Anspruch 1, ferner umfassend
zwischen der Rückaußenwandung (10) und der Rückinnenwandung (12) mindestens eine Zwischenwandung (11).

3. Aufnahmehülle nach Anspruch 2, **dadurch gekennzeichnet, dass** ein dritter Aufnahmeraum (16), insbesondere mit einer Zwischenraumöffnung (24), durch besagte Zwischenwandung (11) und Rückaußenwandung (10) begrenzt ist, insbesondere wobei die Zwischenwandung (11) und Rückaußenwandung (10) in Richtung des Bodenendes (5) und/oder am ersten und zweite Aufnahmehüllenrand (6,7) miteinander verschweißt und/oder verklebt sind.

4. Aufnahmehülle nach Anspruch 2 oder 3, **dadurch gekennzeichnet, dass** der zweite Aufnahmeraum (9) für eine thermische Isoliereinlage (2) in einem zweiten Teilbereich (9b, 9c) durch die Rückinnenwandung (12) und die Zwischenwandung (11) oder die Rückaußenwandung (10) begrenzt ist.

5. Aufnahmehülle nach einem der vorangehenden Ansprüche, **dadurch gekennzeichnet, dass**
der zweite Aufnahmeraum (9) am Bodenende (5) eine Einlageöffnung (17) aufweist, insbesondere über welche eine thermische Isoliereinlage (2) in den zweiten Aufnahmeraum (9) einführbar ist.

6. Aufnahmehülle nach einem der vorangehenden Ansprüche, **dadurch gekennzeichnet, dass**
die Eingriffsöffnung (15) einen Eingriffsöffnungsabschnitt (18) aufweist, mit dem die Eingriffsöffnung (15), insbesondere irreversibel, verschließbar oder verschlossen ist und/oder die Einlageöffnung (17) einen Einlageöffnungsabschnitt (20) aufweist mit dem die Einlageöffnung (17), insbesondere reversibel, verschließbar oder verschlossen ist.

7. Aufnahmehülle nach Anspruch 6, **dadurch gekennzeichnet, dass**
der Eingriffsöffnungsabschnitt (18) losgelöst von dem ersten und zweiten Aufnahmehüllenrand (6, 7) ist und einen Klebestreifen (19) umfasst und/oder dass der Einlageöffnungsabschnitt (20) mit dem ersten und zweiten Aufnahmehüllenrand (6, 7) verbunden, insbesondere verschweißt, ist.

8. Aufnahmehülle nach Anspruch 6 oder 7, **dadurch gekennzeichnet, dass**
der Eingriffsöffnungsabschnitt (18) und/oder Einlageöffnungsabschnitt (20) einstückig mit der Rückaußenwandung (10) verbunden ist.

9. Aufnahmehülle nach einem der vorangehenden Ansprüche, **dadurch gekennzeichnet, dass**
die Aufnahmehülle (1) eine einstückige erste Folie und/oder Papierlage (21) und einstückige zweite Folie und/oder Papierlage (22) umfasst, wobei die erste und zweite Folie und/oder Papierlage (21,22) miteinander verbunden sind,
wobei die einstückige erste Folie und/oder Papierlage (21) die Rückaußenwandung (10) und vorzugsweise den Eingriffsöffnungsabschnitt (18) und/oder Einlageöffnungsabschnitt (20) umfasst und die einstückige zweite Folie und/oder Papierlage (22) die Rückinnenwandung (12), die Vorderinnenwandung (13) und die Vorderaußenwandung (12) und vorzugsweise die Zwischenwandung (11) umfasst.

10. Aufnahmehülle nach einem der Ansprüche 2 bis 9, **dadurch gekennzeichnet, dass** die Eingriffsöffnung (15) einen ersten Öffnungsrand (15a) und einen zweiten Öffnungsrand (15b) aufweist, wobei die Zwischenwandung (11) sowie die Rückinnenwandung (12) am ersten Öffnungsrand (15a), insbesondere einstückig, verbunden sind und die Vorderinnenwandung (13) sowie die Vorderaußenwandung (14) am zweiten Öffnungsrand (15b), insbesondere einstückig, verbunden sind.

11. Aufnahmehülle nach einem der Ansprüche 2 bis 10, **dadurch gekennzeichnet, dass** am ersten und zweiten Aufnahmehüllenrand (6, 7) jeweils zumindest bereichsweise mindestens fünf Wandungen miteinander verschweißt oder verklebt sind, insbesondere die Rückaußenwandung (10), die Zwischenwandung (11), die Rückinnenwandung (12), die Vorderinnenwandung (13) und die Vorderaußenwandung (14), vorzugsweise in dieser Reihenfolge.

12. Aufnahmehülle nach einem der vorangehenden Ansprüche, **dadurch gekennzeichnet, dass**
die Rückaußenwandung (10), die Rückinnenwandung (12), die Vorderinnenwandung (13), die Vorderaußenwandung (14) und/oder die Zwischenwandung, insbesondere die Zwischenwandung (11), transparent ausgebildet sind und/oder Polyethylen oder Polypropylen oder Papier oder Mischungen derselben umfassen.

13. Mehrkammer-Isoliertasche (3) umfassend eine Aufnahmehülle (1) nach einem der vorangehenden Ansprüche und eine thermische Isoliereinlage (2), wobei die thermische Isoliereinlage (2) im zweiten Aufnahmeraum (9) vorliegt und den ersten Aufnahmeraum (8) umschließt, insbesondere den ersten Aufnahmeraum (8) thermisch isoliert und/oder kühlt oder wärmt.

14. Mehrkammer-Isoliertasche nach Anspruch 13, **dadurch gekennzeichnet, dass** die thermische Isoliereinlage (2) U-förmig und/oder einstückig ausgebildet ist und/oder eine mittlere Materialstärke von mindestens 0,25 cm, vorzugsweise mindestens 1,0 cm, im nicht komprimierten Zustand aufweist.

15. Mehrkammer-Isoliertasche nach Anspruch 13 oder 14, wobei die thermische Isoliereinlage ein Polster, insbesondere Wärmedämmtextilpolster, umfasst oder ist und/oder wobei die thermische Isoliereinlage ein Kühlelement, insbesondere aufweisend ein Kühlgel oder Eis, umfasst oder ist.

16. Verwendung der Aufnahmehülle (1) nach einem der Ansprüche 1 bis 12 oder der Mehrkammer-Isoliertasche (3) nach Anspruch 13 oder 15 für Lebensmittel oder Medikamente, insbesondere für den Online-Versand von Lebensmitteln oder Medikamenten.
